Europäisches Patentamt

European Patent Office

Office européen des brevets

(11) Veröffentlichungsnummer: **0 250 828 B1**

(19)

(12) **EUROPÄISCHE PATENTSCHRIFT**

(45) Veröffentlichungstag der Patentschrift:
30.01.91 Patentblatt 91/05

(51) Int. Cl.⁵: **B29C 47/58**, B29C 47/02,
B29C 47/06

(21) Anmeldenummer: 87107303.7

(22) Anmeldetag: 19.05.87

(54) Extruderanlage zum Ummanteln eines strangförmigen Produktes, insbesondere eines Kabels.

(30) Priorität: 26.05.86 DE 3617652

(43) Veröffentlichungstag der Anmeldung:
07.01.88 Patentblatt 88/01

(45) Bekanntmachung des Hinweises auf die
Patenterteilung:
30.01.91 Patentblatt 91/05

(84) Benannte Vertragsstaaten:
AT BE CH DE FR GB IT LI SE

(56) Entgegenhaltungen:
FR-A- 1 096 372
FR-A- 2 031 597
FR-A- 2 314 048
FR-A- 2 492 729
US-A- 3 692 447
US-A- 4 204 496
US-A- 4 551 087

(56) Entgegenhaltungen:
SOVIET INVENTIONS ILLUSTRATED, Woche E
28, 25. August 1982, Nr. 58841, Derwent
Publications Ltd, London, GB; & SU-A-86 3391
(Experi Cons. Tech.) 15-09-1981
PATENT ABSTRACTS OF JAPAN, Band 9, Nr.
256 (M-421)[1979], 15. Oktober 1985; & JP-A-60
105 521 (Hitachi Densen K.K.) 11-06-1985

(73) Patentinhaber: Paul Troester
Maschinenfabrik
Am Brabrinke 2-4
D-3000 Hannover 89 (DE)

(72) Erfinder: Steinecke, Manfred, Dipl.-Ing.
Zum Anger 1a
D-3014 Laatzen 4 (DE)
Erfinder: Nettemann, Heinrich, Dipl.-Ing.
Im Dorffeld 30
D-3005 Hemmingen (DE)

(74) Vertreter: Junius, Walther, Dr.
Wolfstrasse 24
D-3000 Hannover 81 (DE)

## Beschreibung

Die Erfindung betrifft eine Extruderanlage mit einem Spritzkopf zum Ummanteln eines strangförmigen Produktes, insbesondere eines Kabels, mit mehreren unmittelbar nacheinander aufgebrachten Schichten aus Kunststoff und/oder Kautschuk und/oder deren Mischungen, bei der der Spritzkopf auf einem Maschinengestell montiert ist und bei der zu den Seiten des Spritzkopfes Extruder angeordnet sind, die über spezielle Anschlußstücke, Zuführrohrleitungsstücke oder dergl. an den Spritzkopf angeschlossen sind, und bei der der Spritzkopf aus einem zentralen hohlen Dorn, durch die das zu ummantelnde Produkt geführt ist und aus mehreren, im wesentlichen konzentrisch zur dieser angeordneten, Ausformdüsen bildenden Spritzwerkzeugen in Form von Dornen und/oder Leitstücken besteht, die zwischen sich im Querschnitt ringförmige mit ihrem einen Ende die Ausformdüsen bildenden Kanäle einschließen, deren anderes Ende jeweils über die Zufuhrrohrleitungsstücke an einen Extruder angeschlossen ist.

Auf einer derartigen Extruderanlage werden Kabel hergestellt, deren Seele durch die Bohrung des zentralen Dornes geführt ist und anschließend zuerst mit einer dünnen Halbleiterschicht und später mit einer starken Isolationsschicht aus nichtleitendem Kunststoff umgeben wird. Bei dieser Extruderanlage sind die einzelnen die Ausformdüsen bildenden Dorne bzw. Leitstücke exakt zentrisch feststehend angeordnet. Die auf dieser Extruderanlage hergestellten Kabel entsprechen hinsichtlich den Toleranzen der Ummantelung nicht modernen, an ein Hochspannungskabel zu stellenden Anforderungen. Die Stärke der Ummantelungen ist nämlich ringsum die Seele herum nicht gleichmäßig genug.

Es sind auch Extruderanlagen bekannt geworden, bei denen die als Düsen ausgebildeten Dorne geteilt sind und die Endstücke, quer zur Achsrichtung verschiebbar angeordnet sind. Diese Extruderanlage ist aus der FR-A-2 492 729 bekannt. Durch eine Verschiebung der Dorn-Endstücke während des Betriebes läßt sich zwar das Kabel in seine Toleranzen der Ummantelungsschichten besser einstellen, das erzeugte Kabel hat aber insbesondere in der Halbleiterschicht immer wieder Fehlerstellen. Diese sind darauf zurückzuführen, daß an der Verschiebestelle der Dorn-Endstücke im Betrieb zu extrudierendes Material stehenbleibt, das hier anfängt, sich zu vernetzen bzw. zu vulkanisieren und das dann während des Betriebes von Zeit zu Zeit von dem strömenden Material mitgenommen wird und wegen der bereits fortgeschrittenen Vernetzung bzw. Vulkanisation die Fehlerstellen in der Isolier- oder Halbleiterschicht bildet. Derartige Fehlerstellen müssen aus dem Kabel herausgeschnitten werden, was zu erheblichen Verlusten führt, weil nicht nur die Fehlerstelle selbst, sondern auch benachbarte Bereiche meist mit weggeschnitten werden müssen. Die erhaltenen kürzeren Kabelstücke sind oft auch von geringem Wert, wenn sie durch das Ankoppeln eines weiteren Kabelstückes verlängert werden müssen.

Ein Spritzkopf für eine Zweischichtenummantelung ist aus der Literaturstelle SOVIET INVENTIONS ILLUSTRATED bekannt geworden. Bei dieser Extrusionsanlage sind die beiden Extruder auf einer Seite des Spritzkopfes angeordnet, was es erforderlich macht, daß zwischen den beiden Extrudern und dem Spritzkopf ein Übergangsstück mit zwei schräg zueinander verlaufenden Kanälen vorzusehen ist. Die Zuführung des aus dem einen Extruder kommenden und inneren Ummantelungsschlauch geführten Extrudates erfolgt am Rande einer Kugelkalotte des im Spritzkopf angeordneten Kugelgelenkes, welches sich teilweise in den Weg des vom Extruder kommenden Extrudates einschiebt. Die ringförmige Verteilung des extrudierten Materials aus dem Zuführungskanal am Rande dieser Kugelkalotte ist ungünstig, weil hier das Material bei der Verteilung über den großen Durchmesser der Kugelkalotte langsam fließt und im Fließschatten stehenbleiben, vulkanisieren bzw. vernetzen kann und dadurch Inhomogenitäten bilden kann, die das Extrudat Ausschuß werden lassen.

Durch die US-A-36 92 447 ist es bekannt, in einem Zuführungskanal von einem Extruder zu einem Spritzkopf ein bewegliches Kanalstück mit zwei Kugelgelenken anzuordnen. Bei schlechter Extruderausvichtung besteht die Gefahr von Auvulkanisatieren im Fließweg aus den Gelenksstellen.

Die Erfindung vermeidet diese Nachteile. Es ist die Aufgabe der Erfindung, eine Extruderanlage mit einem hochgenau ummantelnden Spritzkopf zu schaffen, der während des Betriebes einstellbar und nachstellbar ist und der so gestaltet ist, daß in den Fließwegen des zu extrudierenden Materiales Materialansammlungen nicht hängenbleiben und bereits im Fließweg vulkanisieren oder vernetzen.

Die Erfindung besteht darin, daß der den zentralen Dorn nächst umgebende mittlere Dorn in einem kugelkalottenflächen aufweisenden Gelenk verschwenkbar und feststellbar gelagert ist, und daß in den mittleren Dorn seitlich ein erstes Zulaufrohrstück fest eingebaut ist, welches mit dem zugeordneten Extruder über mindestens ein weiteres Zulaufrohrstück verbunden ist, wobei das erste Zulaufrohrstück mit dem nächsten und dieses oder ein nachfolgendes mit dem Extruder über Gelenke mit Kugelkalotten aufweisenden Flächen verbunden ist.

Ein derartiges Gelenk mit kugelkalottenflächen läßt sich derart gestalten, daß keine Taschen oder Vorsprünge gebildet sind, an denen oder hinter denen Materialansammlungen außerhalb des Fließweges des zu extrudierenden Materials stehen bleiben. Mit der Anwendung eines derartigen Kugelgelenkes ist jedoch der erfindungsgemäße technische Erfolg nicht allein erreichbar, es muß auch das Materialzuführungsrohr so gestaltet sein, daß hier kein zu extrudierendes Material stehen- oder hängenbleibt. Das ist bei dieser Extruderanlage erreicht.

Zweckmäßig ist es, wenn der mittlere Dorn in ein hohl ausgebildetes Leitstück eingeschoben ist, das an seinem Ende das mit Kugelkalottenflächen gebildete Gelenk trägt, um eine baulich einfache Lösung zu haben, bei der der mittlere Dorn für Reinigungszwecke in Extrusionsrichtung herausgezogen werden kann.

Vorteilhaft ist es, wenn der Grundkörper an seinem Ende eine ringförmige Kugelkalottenfläche aufweist, gegen die ein am Ende des mittleren Dornes gelagerter auch als Dichtung wirkender Vorspannring gepreßt ist. Über den Ring wird die Vorspannung erreicht, die die Kugelkalotte in die Lagerschale preßt und damit verhindert, daß im Anfahrzustand Masse zwischen diese Flächen dringt. Die Fläche zwischen dem Leitstück und dem Anpreßring ist als Kalotte ausgebildet, damit bei Verstellung gleichbleibende Verhältnisse vorliegen.

Eine einfache Einstellmöglichkeit wird dadurch erreicht, daß im Grundkörper mindestens drei am mittleren Dorn anliegende Verstellschrauben angeordnet sind.

Weiterhin ist es vorteilhaft für eine günstige Einstellmöglichkeit, wenn der zentrale Dorn gegenüber dem Maschinengestell und gegenüber dem ihn umgebenden mittleren Dorn verschwenkbar und feststellbar ist. In den Dorn kann eine Kalotte in ähnlicher Weise eingebracht werden. Damit kann die innen aufzubringende Schicht genau eingestellt werden. Ein besonderer Vorteil ist, daß bei Verstellung des mittleren Dornes der Materialführungskanal nicht verändert wird.

Sollten noch weitere Ummantelungsschichten vorgesehen werden, so sind diese meist dünn und bei ihnen ist der Materialfluß nicht so problematisch wie bei den inneren aufzubringenden Schichten. Daher ist es zweckmäßig, wenn weiter außen angeordnete weitere Rohrstücke von Ausformdüsen gegenüber den inneren Dornen und dem Grundkörper senkrecht zu deren Achsrichtung verschiebbar und feststellbar angeordnet sind.

Damit die Zulaufrohrleitung sich bei einer Einstellung des zweiten Düsenrohrstückes frei bewegen kann, ist es zweckmäßig, wenn im Grundkörper an der Stelle des Materialzuführungsrohres ein Loch von größerem Durchmesser als dem Durchmesser des Materialzuführungsrohres vorgesehen ist.

Um dem zweiten Düsenrohrstück nach der Einstellung einen festen Sitz zu geben, ist es zweckmäßig, wenn der zentrale Dorn an seinem Ende einen Flansch trägt, durch dessen Löcher in den mittleren Dorn endseitig achsparallel eingeschraubte Schrauben hindurchgreifen.

Dabei ist es für eine gute Zuführung des Materials zweckmäßig, wenn zwischen dem Zuführrohrstück und dem das zu extrudierende Material in den Düsenspalt des Materialzuführungskanales einführenden Materialverteilkanal ein achsparalleler Fließkanal angeordnet ist.

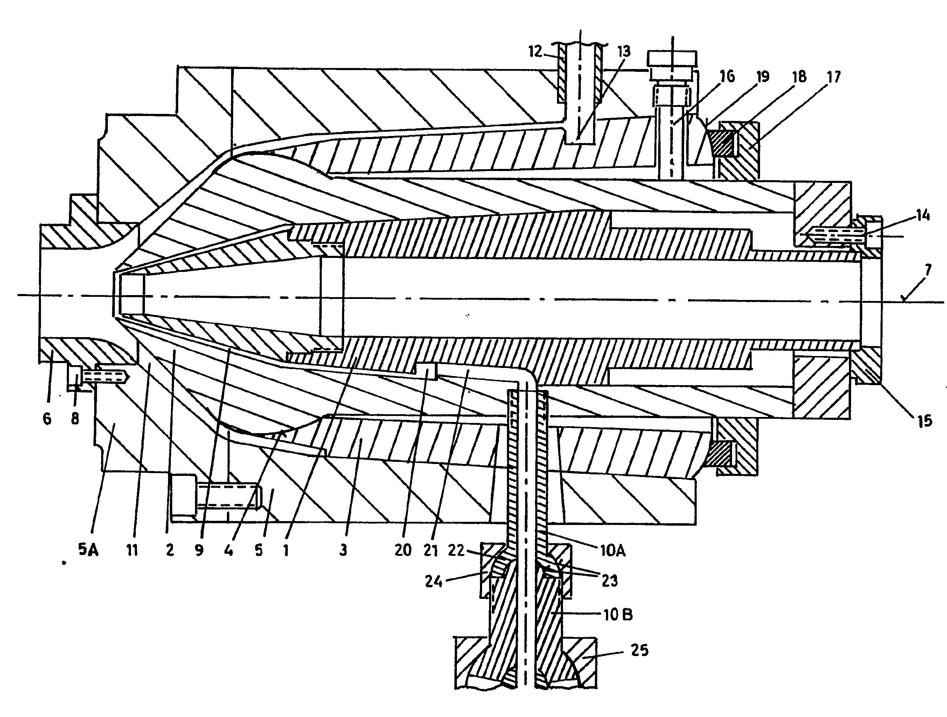

Das Wesen der vorliegenden Erfindung ist nachstehend anhand eines in der Zeichnung schematisch dargestellten Ausführungsbeispieles näher erläutert. Die Zeichnung zeigt einen Querschnitt durch den Spritzkopf einer erfindungsgemäßen Extruderanlage.

Auf einem Maschinengestell sind der in der Zeichnung dargestellte Spritzkopf fest, ein in der Zeichnung nicht dargestellter Extruder ebenfalls fest und ein in der Zeichnung weiter nicht dargestellter zweiter Extruder in Richtung quer zur Achse 7 des Spritzkopfes verschiebbarer und feststellbarer Extruder angeordnet.

Der in der Zeichnung näher dargestellte Spritzkopf besteht aus einem zentralen Dorn 1, durch dessen zentrale Bohrung das zu ummantelnde strangförmige Produkt von rechts nach links hindurchgeführt wird, einem mittleren, ebenfalls hohlem Dorn 2, welcher im wesentlichen konzentrisch zur Achse 7 angeordnet ist und auf dem rohrförmigen Leitstück 3 mittels der Kugelgelenkflächen 4 gelagert, sowie aus dem ebenfalls rohrförmigen Grundkörper 5, welcher fest mit dem Maschinengestell verbunden ist und das Leitstück 3 umgibt. Diese wie Düsen geformten Dorne und ein Ansatz 5A am Grundkörper 5 sind durch ein Mundstück 6 abgeschlossen, welches mittels Schrauben 8 am Ansatz 5A am Grundkörper 5 besfestigt ist. Zwischen dem zentralen Dorn 1 und dem mittleren Dorn 2 ist ein im Querschnitt ringförmiger Materialführungskanal 9 gebildet, der über spezielle Anschlußstücke, die das Materialzuführungsrohr 10 bilden, aus einem Extruder gespeist wird. Zwischen dem mittleren Dorn 2 und dem Grundkörper 5 ist ein weiterer Materialführungskanal 11 gebildet, welcher durch ein Anschlußstück in Form des Materialzuführungsrohres 12 über den Materialverteilkanal 13 gespeist wird. Bei der Kabelherstellung wird die Kabelseele durch den zentralen Dorn 1 zugeführt und erhält zuerst eine dünne Schicht eines Halbleiters, der durch den Materialführungskanal 9 zugeführt und aufgetragen wird und sodann unmittelbar daran anschließend eine stärkere Mantelschicht, deren Material durch den Materialführungskanal 11 zugeführt wird.

Der mittlere Dorn 2 ist aus dem Kugelgelenk 4 herausziehbar, sobald das Mundstück 6 und der vordere Teil 5A des Grundkörpers 5 abgebaut sind. Damit der mittlere Dorn nach Einstellung des Materialführungskanales 9 fest in dem zentralen Dorn 1 verbunden ist, sind in die hintere (rechte) Stirnseite des mittleren Dornes Schrauben 14 eingeschraubt, die sich auf einen an der zentralen Düse an deren hinterer Stirnseite angebrachten Flansch 15 abstützen.

Eine Einstellung des mittleren Dornes 2 gegenüber dem Grundkörper 5 und damit gegenüber dem Gestell erfolgt durch Verstellschrauben 16, die mit einem Gewinde im Leitstück 3 eingeschraubt sind und mit ihrer Stirnseite seitlich an dem mittleren Dorn 2 anliegen.

Eine Abdichtung nach hinten erfolgt dadurch, daß der mittlere Dorn 2 an seinem Ende einen Flansch 17 trägt, in welchem ein unter Federkraft stehender Vorspannring 18 in einer ringförmigen Ausnehmung federnd gelagert ist, der gegen die als Kugelkalottenringfläche ausgebildete endseitige Stirnfläche des Leitstückes 3 drückt und dadurch die Abdichtung bewirkt.

Die Zuführung des Ummantelungsmateriales in den Materialführungskanal 9 von ringförmigem Querschnitt erfolgt über den Materialverteilkanal 20, welcher über den Fließkanal 21 mit dem Materialzuführungsrohr 10 verbunden ist. Der Materialzuführungsrohrteil 10A ist mittels eines Schraubgewindes in ein Gewindeloch in dem mittleren Dorn 2 eingeschraubt. An seinem anderen Ende ist das Materialzuführungsrohrstück 10A mit einer kugelkalottenartigen Erweiterung 22 versehen, in deren innere Hohlkugelkalottenringfläche das ebenfalls kugelkalottenförmig ausgebildete Endstück des Materialzuführungsrohrstückes 10B eingreift und anliegt. Das Ende des Materialzuführungsrohrstückes 10B ist mit einem Gewinde versehen, auf welches eine Verschraubung 24 geschraubt ist, die innenseitig mit einer Hohlkugelkalottenringfläche 24 versehen ist und die kugelkalottenartige Erweiterung 22 überfaßt. In ähnlicher Weise ist mit einer Verschraubung 25 die kugelkalottenartige endseitige Erweiterung des Rohrstückes 10B am Extruder befestigt.

Innerhalb der Dorne 1, 2, des Leitstückes 3 und des Grundkörpers 5, sowie seines Ansatzes 5A, können Kanäle für ein Temperiermedium untergebracht sein, die nicht gezeichnet sind.

Falls weitere Ummantelungsschichten aufzubringen sind, wird anstelle des Mundstückes 6 ein Bauteil mit einem oder mehreren weiteren Materialzuführungskanälen an den Grundkörper 5 bzw. seinen Ansatz 5A angebaut.

## Ansprüche

1. Extruderanlage mit einem Spritzkopf zum Ummanteln eines strangförmigen Produktes, insbesondere eines kabels mit mehreren unmittelbar nacheinander aufgebrachten Schichten aus Kunststoff und/oder Kautschuk und/oder deren Mischungen, bei der der Spritzkopf auf einem Maschinengestell montiert ist und bei der zu den Seiten des Spritzkopfes Extruder angeordnet sind, die über spezielle Anschlußstücke, Zuführrohrleitungsstücke oder dergl. an den Spritzkopf angeschlossen sind, und bei der der Spritzkopf aus einem zentralen hohlen Dorn, durch die das zu ummantelnde Produkt geführt ist und aus mehreren, im wesentlichen konzentrisch zu dieser angeordneten, Ausformdüsen bildenden Spritzwerkzeugen in Form von Dornen und/oder Leitstücken besteht, die zwischen sich im Querschnitt ringförmige mit ihrem einen Ende die Ausformdüsen bildenden Kanäle einschließen, deren anderes Ende jeweils über die Zufuhrrohrleitungsstücke an einen Extruder angeschlossen ist, dadurch gekennzeichnet, daß der den zentralen Dorn (1) nächst umgebende mittlere Dorn (2) in einem Kugelkalottenflächen auf weisenden Gelenk (4) verschwenkbar und feststellbar gelagert ist, und daß das in den mittleren Dorn (2) seitlich fest eingebaute erste Zulaufrohrstück (10A) mit dem zugeordneten Extruder über mindestens ein weiteres Zulaufrohrstück (10B) verbunden ist, wobei das erste Zulaufrohrstück (10A) mit dem nächsten und dieses oder ein nachfolgendes mit dem Extruder über Gelenke (22) mit Kugelkalotten aufweisenden Flächen (23) verbunden ist.

2. Extruderanlage nach Anspruch 1, dadurch gekennzeichnet, daß der mittlere Dorn (2) in ein hohl ausgebildetes Leitstück (3) eingeschoben ist, das an seinem Ende das mit Kugelkalottenflächen (4) gebildete Gelenk trägt.

3. Extruderanlage nach Anspruch 1, dadurch gekennzeichnet, daß der Grundkörper (5) an seinem Ende eine ringförmige Kugelkalottenfläche (19) aufweist, gegen die ein am Ende des mittleren Dornes (2) gelagerter, auch als Dichtung wirkender Vorspannring (18), gepreßt ist.

4. Extruderanlage nach Anspruch 1, dadurch gekennzeichnet, daß im Grundkörper (5) mindestens drei am mittleren Dorn (2) anliegende Verstellschrauben (16) angeordnet sind.

5. Extruderanlage nach Anspruch 1, dadurch gekennzeichnet, daß der zentrale Dorn (1) gegenüber dem Maschinengestell und gegenüber dem ihm umgebenden mittleren Dorn (2) verschwenkbar und feststellbar ist.

6. Extruderanlage nach Anspruch 1, dadurch gekennzeichnet, daß weiter außen angeordnete weitere Rohrstücke von Ausformdüsen gegenüber den inneren Dornen und dem Grundkörper (1, 2, 5) senkrecht zu deren Achsrichtung verschiebbar und feststellbar angeordnet sind.

7. Extruderanlage nach Anspruch 1, dadurch gekennzeichnet, daß im Grundkörper (5) an der Stelle des Materialzuführungsrohres (10) ein Loch von größerem Durchmesser als dem Durchmesser des Materialzuführungsrohres (10) vorgesehen ist.

8. Extruderanlage nach Anspruch 1, dadurch gekennzeichnet, daß der zentrale Dorn (1) an seinem Ende einen Flansch (15) trägt, durch dessen Löcher in den mittleren Dorn (2) endseitig achsparallel eingeschraubte Schrauben (14) hindurchgreifen.

9. Extruderanlage nach Anspruch 1, dadurch gekennzeichnet, daß zwischen dem Zuführungsrohrstück (10) und dem das zu extrudierende Material in den Düsenspalt des Materialzuführungskanales (9) einführen den Materialverteilkanal (20) ein achsparalleler Fließkanal (21) angeordnet ist.

## Claims

1. An extruder assembly comprising an extrusion head for encasing a strand-like product, in particular a cable, with a plurality of layers, applied directly consecutively, of synthetic resin and/or rubber and/or mixtures thereof, wherein the extrusion head is mounted on a machine frame and wherein extruders are arranged at the sides of the extrusion head, which extruders are connected via special connecting components, supply pipeline components or the like, to the extrusion head, and wherein the extrusion head comprises a central, hollow mandrel through which the product which is to be encased is conducted, and comprises a plurality of extrusion tools which are arranged substantially concentrically with the said mandrel, form extrusion nozzles, and consist of mandrels and/or guide components which enclose channels of annular cross-section which at their one end form the extrusion nozzles and at their other end are each connected to an extruder via the supply pipeline components, characterised in that the middle mandrel (2) which closely surrounds the central mandrel (1) is mounted so that it can be pivoted and fixed in a joint (4) having hemispherical surfaces, and that the first inflow pipeline component (10A) which is permanently installed into the side of the middle mandrel (2) is connected to the assigned extruder via at least one further inflow pipeline component (10B), wherein the first inflow pipeline component (10A) is connected to the next inflow pipeline component, and the latter or a following inflow pipeline component is connected to the extruder via joints (22) having hemispherical surfaces (23).

2. An extruder assembly as claimed in claim 1, characterised in that the middle mandrel (2) is inserted into a hollow guide component (3) which at its end bears the joint formed by hemispherical surfaces (4).

3. An extruder assembly as claimed in claim 1, characterised in that at its end the main body (5) comprises an annular hemispherical surface (19) against which a pre-tensioning ring (18), which is mounted at the end of the middle mandrel (2) and also serves as a seal is pressed.

4. An extruder assembly as claimed in claim 1, characterised in that at least three adjusting screws (16) which bear against the middle mandrel (2) are arranged in the main body (5).

5. An extruder assembly as claimed in claim 1, characterised in that the central mandrel (1) can be pivoted and fixed in relation to the machine frame and in relation to the middle mandrel (2) by which it is surrounded.

6. An extruder assembly as claimed in claim 1, characterised in that further pipe components arranged further to the exterior of extrusion nozzles, are arranged so that they can be displaced and fixed in relation to the inner mandrels and the main body (1, 2, 5) at right-angles to the axial direction thereof.

7. An extruder assembly as claimed in claim 1, characterised in that an aperture having a larger diameter than the diameter of the material supply pipe (10) is provided in the main body (5) at the location of the material supply pipe (10).

8. An extruder assembly as claimed in claim 1, characterised in that at its end the central mandrel (1) bears a flange (15) through the apertures of which screws (14), screwed into the end face of the middle mandrel (2) in axially parallel fashion, engage.

9. An extruder assembly as claimed in claim 1, characterised is that an axially parallel flow channel (21) is arranged between the supply pipeline component (10) and the material distribution channel (20) which introduces the material which is to be extruded into the nozzle gap of the material supply channel (9).

## Revendications

1. Installation d'extrusion comportant une tête d'injection destinée à revêtir un produit de grande longueur, notamment un câble, qui comprend plusieurs couches de matière plastique et/ou de caoutchouc et/ou de mélanges de ces substances déposées immédiatement l'une après l'autre, installation dans laquelle la tête d'injection est montée sur un bâti de machine et dans laquelle sont agencées, sur les côtés de la tête d'injection, des extrudeuses qui sont raccordées à la tête d'injection par l'intermédiaire de pièces de raccordement spéciales, d'éléments de conduites tubulaires d'amenée ou équivalents, et dans laquelle la tête d'injection est composée d'un mandrin central creux, à travers lequel on fait passer le produit à revêtir, et de plusieurs outils d'injection constitués par des mandrins et/ou des éléments directeurs, qui forment des filières et sont disposés sensiblement concentriquement au mandrin creux, ce mandrin et ces outils d'injection enfermant entre eux des canaux annulaires en section transversale, qui forment les filières à une de leurs extrémités, tandis que l'autre extrémité de chaque canal est raccordée à une extrudeuse par l'élément de conduite tubulaire d'amenée, caractérisée en ce que le mandrin moyen (2) qui entoure immédiatement le mandrin central (1) est monté mobile en orientation et susceptible d'être immobilisé dans une articulation (4) qui présente des surfaces en calotte de sphère et en ce que le premier segment (10A) de tube d'arrivée monté rigidement latéralement dans le mandrin moyen (2) est relié à l'extrudeuse correspondante par l'intermédiaire d'au moins un autre segment (10B) de tube d'arrivée, le premier segment (10A) de tube d'arrivée étant relié au suivant, et celui-ci ou un segment suivant étant relié à l'extrudeuse, par des articulations (22) présentant des surfaces (23) en calotte de sphère.

2. Installation d'extrusion selon la revendication 1, caractérisée en ce que le mandrin moyen (2) est emmanché dans un élément directeur creux (3) qui porte à son extrémité l'articulation munie de surfaces (4) en calotte de sphère.

3. Installation d'extrusion selon la revendication 1, caractérisée en ce que le corps de base (5) présente à son extrémité une surface annulaire (19) en calotte de sphère contre laquelle est pressée la bague de précontrainte (18) montée à l'extrémité du mandrin moyen (2) et qui joue aussi le rôle d'élément d'étanchéité.

4. Installation d'extrusion selon la revendication 1, caractérisée en ce que, dans le corps de base (5) sont disposées au moins trois vis de réglage (16) appuyées contre le mandrin (2).

5. Installation d'extrusion selon la revendication 1, caractérisée, en ce que le mandrin central (1) peut être déplacé angulairement et immobilisé par rapport au bâti de la machine et au mandrin moyen (2) qui l'entoure.

6. Installation d'extrusion selon la revendication 1, caractérisée en ce que d'autres segments de tubes de filières disposés plus loin vers l'extérieur sont agencés de façon à être mobiles en translation par rapport aux mandrins intérieurs et au corps de base (1, 2, 5), dans la direction perpendiculaire à leur axe et à pouvoir être immobilisés.

7. Installation d'extrusion selon la revendication 1, caractérisée en ce qu'il est prévu dans le corps de base (5), à l'endroit du tube (10) d'amenée de la matière, un trou de diamètre supérieur au diamètre (10) d'amenée de la matière.

8. Installation d'extrusion selon la revendication 1, caractérisée en ce que le mandrin central (1) porte à son extrémité une collerette (15) à travers les trous de laquelle passent des vis (14) qui se vissent en bout dans le mandrin moyen (2) dans une direction parallèle à l'axe.

9. Installation d'extrusion selon la revendication 1, caractérisée en ce qu'un canal d'écoulement (21) parallèle à l'axe est prévu entre le segment (10) de tube d'amenée et le canal (20) de répartition de la matière qui introduit la matière à extruder dans la fente de filière du canal (9) d'aménée de la matière.